# EUROPÄISCHE PATENTANMELDUNG

(11) **EP 1 598 485 A2**
(43) Veröffentlichungstag der Anmeldung: **23.11.2005**
(21) Anmeldenummer: 05103189.6
(22) Anmeldetag: 20.04.2005
(51) Int. Cl.: E03B 3/10

(54) **Vorrichtung zum Evakuieren eines Steigleitungsrohres**

(30) Priorität: 17.05.2004 DE 202004008060 U
(71) Anmelder: Stüwa Konrad Stükerjürgen GmbH, 33397 Rietberg (DE)
(72) Erfinder: Stükerjürgen, Ralf, 33397 Rietberg (DE)
(74) Vertreter: Dantz, Jan Henning

(57) **Zusammenfassung**

Eine Vorrichtung zum Evakuieren eines Steigleitungsrohr (1), insbesondere für einen Tiefbrunnen zur Förderung von Wasser aus größeren Tiefen, umfasst eine Absaughülse (11), die auf ein mit einem evakuierbaren Ringraum (2) versehenes Steigleitungsrohr (1) aufschiebbar ist, wobei an die Absaughülse (11) mindestens eine Absaugleitung zum Evakuieren des Ringraumes (2) anschließbar ist und an der Absaughülse (11) ein Werkzeug (15) angeordnet ist, mittels dem ein Abdichtelement (8) in eine Öffnung an dem Steigleitungsrohr (1) zum Abdichten des Ringraumes (2) montierbar ist. Dadurch wird die Herstellung eines Steigleitungsrohres (1) vereinfacht und es ist nicht notwendig, aufwendige Ventile an dem Steigleitungsrohr zu montieren.

## Beschreibung

Die vorliegende Erfindung betrifft eine Vorrichtung zum Evakuieren eines Steigleitungsrohres, insbesondere für einen Tiefbrunnen zur Förderung von Wasser aus größeren Tiefen, mit einer Absaughülse, die auf ein mit einem evakuierbaren Ringraum versehenes Steigleitungsrohr aufschiebbar ist.

Es ist bekannt, Steigleitungsrohre zum Fördern von Thermalwasser aus großen Tiefen einzusetzen, wobei die Steigleitungsrohre in vorbestimmten Längen vorgefertigt werden und dann in mehreren Abständen zu einer kompletten Steigleitung zusammengesetzt werden. Um eine gute Wärmeisolation zu erreichen und damit den Wärmeverlust des geförderten Thermalwassers über die gesamte Förderhöhe möglichst gering zu halten, sind die Steigleitungsrohre als Vakuum-Doppelrohre ausgebildet und besitzen einen evakuierbaren Ringraum. Die Evakuierung dieses Ringraumes erfolgt über Vakuumpumpen die mit einem Ventil an dem Steigleitungsrohr verbunden werden und dann für eine Evakuierung sorgen. Anschließend wird über das Ventil das Steigleitungsrohr wieder verschlossen. Bei Einsatz eines einfachen Kugelhahnes besteht der Nachteil, dass dieser wegen der beengten Platzverhältnisse stört. Als Alternative könnte ein Rückschlagventil eingesetzt werden, das jedoch die Herstellungskosten des Steigleitungsrohres erheblich erhöht.

Es ist daher Aufgabe der vorliegenden Erfmdung eine Vorrichtung zum Evakuieren eines Steigleitungsrohres zu schaffen, mit dem die Steigleitungsrohre auf einfache Weise evakuiert werden können.

Diese Aufgabe wird mit einer Vorrichtung zum Evakuieren eines Steigleitungsrohres mit den Merkmalen des Anspruches 1 gelöst.

Erfindungsgemäß ist an die Absaughülse mindestens eine Absaugleitung zum Evakuieren des Ringraumes anschließbar und an der Absaughülse ein Werkzeug angeordnet, mittels dem ein Abdichtelement in eine Öffnung an dem Steigleitungsrohr zum Abdichten des Ringraumes montierbar ist. Mittels der erfindungsgemäßen Vorrichtung kann somit nicht nur wie bei einer herkömmlichen Evakuierungspumpe der Ringraum evakuiert werden, sondern zusätzlich wird über das Werkzeug ein Abdichtelement gleich nach der Evakuierung montiert. Dadurch können mit der Vorrichtung die Schritte des Evakuierens und des Verschließens einer Öffnung zu dem evakuierbaren Ringraum durchgeführt werden, was die Herstellung eines Steigleitungsrohres erheblich vereinfacht. Insbesondere ist es nicht notwendig, aufwendige Ventile an dem Steigleitungsrohr zu montieren.

Gemäß einer bevorzugten Ausführungsform der Erfindung ist das Werkzeug abgedichtet durch ein Gehäuse der Absaughülse durchgeführt. Dabei kann an der Absaughülse eine radial hervorstehende rohrförmige Durchführung angeordnet sein, durch die ein Schaft des Werkzeuges abgedichtet durchgeführt ist. Durch die hervorstehende Anordnung des Werkzeuges lässt sich dieses leicht bedienen und insbesondere kann auch die Position des Abdichtelementes sichtbar gemacht werden.

Vorzugsweise weißt die Absaughülse zwei voneinander beabstandete ringförmige Dichtelemente auf, zwischen denen das Werkzeug zu dem Steigleitungsrohr durchführbar ist. Dadurch lässt sich die Absaughülse einfach auf das Steigleitungsrohr durch Aufschieben montieren. Dabei kann an der Absaughülse ein Anschlag vorgesehen sein, um das Werkzeug benachbart zu dem Dichtungselement anzuordnen.

Das Werkzeug kann als Schraubendreher ausgebildet sein, das eine Abdichtschraube mit Innensechskant in eine Gewindebohrung des Steigleitungsrohres eindreht. Auch andere Werkzeuge können vorgesehen sein, je nach dem was für ein Abdichtelement die Öffnung an dem Steigleitungsrohr verschließen soll.

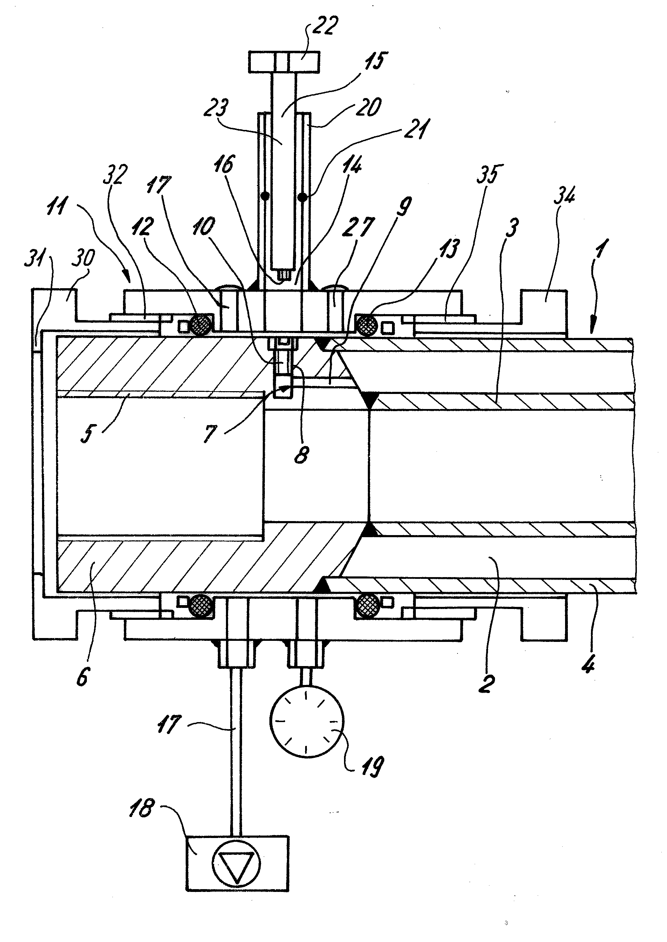

Die Erfindung war von anhand eines Ausführungsbeispiel mit Bezug auf die beigefügte Zeichnung näher erläutert.

Die einzige Figur zeigt einen schematisch dargestellten Längsschnitt durch eine Vorrichtung zur Evakuierung eines Steigleitungsrohres an einem Endbereich eines Steigleitungsrohres.

In der Zeichnung ist ein stirnseitiger Endbereich eines insgesamt mit dem Bezugszeichen 1 versehenen Steigleitungsrohres für einen Tiefbrunnen zur Förderung von Thermalwasser gezeigt. Dieses Steigleitungsrohr 1 ist als Vakuum-Doppelrohr mit einem evakuierten Ringraum 2 ausgebildet. Dieser Ringraum 2 liegt zwischen einem Innenrohr 3 und einem Außenrohr 4.

Das Steigleitungsrohr 1 ist an seinem in der Zeichnung nicht dargestellten stirnseitigen Ende in an sich bekannter Weise mit einem Gewindezapfen und an seinem in der Zeichnung gezeigten stirnseitigen Ende mit einer Gewindebohrung 5 versehen, deren Durchmesser dem Durchmesser des Gewindezapfens am anderen stirnseitigen Ende entspricht.

Hierdurch können mehrere gleichartige Steigleitungsrohre 1 miteinander verschraubt werden.

Im dargestellten Ausführungsbeispiel ist die Gewindebohrung 5 in einen Ringstutzen 6 eingebracht, der sowohl mit dem Innenrohr 3 wie auch mit dem Außenrohr 4 fest und abdichtend verbunden ist. Vorzugsweise ist der Ringstutzen 6 mit dem Innenrohr 3 und dem Außenrohr 4 verschweißt.

In den Ringstutzen 6 ist eine Absaugbohrung 7 eingebracht, über welche der Ringraum 2 des Steigleitungsrohres 1 evakuierbar ist. Die Absaugbohrung 7 umfaßt eine radial in den Ringstutzen 6 eingebrachte Gewindebohrung 8 und eine damit in Verbindung stehende, axial verlaufende und in den Ringraum 2 einmündende Bohrung 9, wobei die Gewindebohrung 8 eine Abdichtschraube 10 zur Abdichtung des Ringraumes 2 nach einer Evakuierung dient.

Zur Evakuierung des besagten Ringraumes 2 kann auf das dargestellte stirnseitige Ende des Steigleitungsrohres 1 eine insgesamt mit dem Bezugszeichen 11 versehene Absaughülseaufgesetzt werden. Diese Absaughülse 11 ist mit zwei Dichtringen 12 und 13 versehen, welche fest und abdichtend auf den Ringstutzen 6 bzw. das äußere Rohr 4 aufpreßbar sind. Damit wird zwischen den beiden Dichtringen 12 und 13 ein nach außen hin abgedichteter Bereich gebildet. Durch diesen abgedichteten Bereich verläuft radial ein nach außen hin ebenfalls abgedichteter Einführungskanal 14 für ein Werkzeug 15, welches an seinem dem Ringstutzen 6 zugewandten stirnseitigen Ende mit einem Außensechskant 16 versehen ist. Dieser Außensechskant 16 dient zur Betätigung der schon erwähnten Abdichtschraube 10, die mit einem mit Innensechskant versehenen Schraubenkopf ausgestattet ist.

Zwischen den beiden Dichtringen 12 und 13 mündet in den dadurch abgedichteten Ringraum sowohl eine Saugleitung 17 einer Vakuumpumpe 18 wie auch ein Meßfühler eines Manometers 19.

Vorzugsweise ist die Absaughülse11 gegen einen Endanschlag 31 in axialer Richtung auf das stirnseitige Ende des Steigleitungsrohres 1 aufschiebbar. Die Lage des Anschlages 31 ist dabei so gewählt, daß bei Anlage der Absaughülse11 an diesem Anschlag 31 die Längsachse des Werkzeuges 15 exakt in der Ebene der Längsachse der Gewindebohrung 8, die, wie oben erwähnt, einen Teil der Absaugbohrung 7 bildet, liegt. Durch Verdrehen der Absaugglocke 11 auf dem Steigleitungsrohr 1 kann die Längsachse des Werkzeuges 15 dann auch in eine Flucht mit der Längsachse der besagten Gewindebohrung 8 gebracht werden, so daß nach dem Evakuieren des Ringraumes 2 noch unter Aufrechterhaltung der Wirkung der Vakuumpumpe 18 die Abdichtschraube 10 in die Gewindebohrung 8 eingeschraubt werden kann.

Dies setzt natürlich voraus, daß vor dem Ansetzen der Absaughülse 11 auf das Steigleitungsrohr 1 die besagte Abdichtschraube 10 auf das Werkzeug 15 mit einem am stirnseitigen Ende vorgesehenen Sechskant 16 aufgesetzt wird.

Um die fluchtende Lage der Längsachse des Werkzeuges 15 zur Längsachse der Gewindebohrung 8 leichter finden zu können, sind im Umgebungsbereich des Werkzeuges 15 Lichtgläser 17 vorgesehen, die eine visuelle Beobachtung und Erkennung der Gewindebohrung 8 ermöglichen, sobald diese in den gewünschten Verschwenkbereich der Absaughülse 11 gelangt.

Selbstverständlich wird zur sicheren Abdichtung der Absaugbohrung 7 die Abdichtschraube 10 gegen einen nicht weiter dargestellten Dichtring angeschraubt, wobei selbstverständlich auch weitere oder andere Abdichtmittel, die dem Fachmann bekannt sind, Verwendung finden können.

Nachdem der Ringraum 2 entsprechend evakuiert ist und die Absaugbohrung 7 einwandfrei abdichtend verschlossen ist, kann die Absaughülse 11 wieder vollständig vom Steigleitungsrohr 1 abgenommen und für die Evakuierung eines weiteren Steigleitungsrohres verwendet werden.

Der Endanschlag 31 ist durch einen radial nach innen gerichteten Vorsprung gebildet, der an einer Mutter 30 angeformt ist. Die Mutter 30 ist über ein Gewinde 32 mit der Absaughülse 11 verbunden und wird bis zu einem Dichtungsring 12 eingeschraubt, um diesen zu komprimieren und einen abgedichteten Innenraum bereit zu stellen. Auf der gegenüberliegenden Seite der Absaughülse 11 ist eine weitere Muter 34 vorgesehen, die über ein Gewinde mit einer Stirnkante gegen die Dichtung 13 gedrückt werden kann.

Das Steigleitungsrohr 1 kann in Abweichung vom dargestellten Ausführungsbeispiel natürlich auch mit einer Absaugbohrung ausgestattet sein, die ausschließlich in Achsrichtung des Steigleitungsrohres 1 verläuft und somit stirnseitig beispielsweise aus dem Ringstutzen oder einem anderen Abschlußelement austritt. Bei einer derartigen Ausführungsform würde dann natürlich auch wieder entsprechend die Abdichtschraube axial zum Steigleitungsrohr 1 verlaufen müssen. Um eine derart axial verlaufende Abdichtschraube unter Vakuum in Dichtstellung einschrauben zu können, wäre bei einer angepaßten Absaughülse das Werkzeug 15 und der entsprechende Einführungskanal 14 ebenfalls axial zum Steigleitungsrohr 1 verlaufend anzuordnen.

An der Absaughülse 11 ist eine radial hervorstehende rohrförmige Durchführung 20 angeordnet, durch die das Werkzeug abgedichtet durchgeführt ist. Hierfür ist ein Dichtring 21 vorgesehen, durch die ein stabförmiger Schaft 23 des Werkzeuges 15 bewegbar ist. An der äußeren Seite weist das Werkzeug 15 einen Griffabschnitt 22 und an der gegenüberliegenden einen Werkzeugkopf 16 auf.

Die Erfindung ist nicht auf das dargestellte Ausführungsbeispiel beschränkt. Beispielsweise kann die Vorrichtung zum Evakuieren auch eine Absaugleitung aufweisen, die unmittelbar benachbart zu der Durchführung für das Werkzeug angeordnet ist. Dann muss die Vorrichtung nicht über den gesamten Umfang einen Evakuierungsspalt um das Steigleitungsrohr ausbilden. Es reicht somit aus, wenn der Bereich um die Absaugöffnung an dem Steigleitungsrohr über die Absaugleitung evakuiert wird.

## Patentansprüche

1. Vorrichtung zum Evakuieren eines Steigleitungsrohr (1), insbesondere für einen Tiefbrunnen zur Förderung von Wasser aus größeren Tiefen, mit einer Absaughülse (11), die auf ein mit einem evakuierbaren Ringraum (2) versehenes Steigleitungsrohr (1) aufschiebbar ist, **dadurch gekennzeichnet, daß** an die Absaughülse (11) mindestens eine Absaugleitung zum Evakuieren des Ringraumes (2) anschließbar ist und an der Absaughülse (11) ein Werkzeug (15) angeordnet ist, mittels dem ein Abdichtelement (8) in eine Öffnung an dem Steigleitungsrohr (1) zum Abdichten des Ringraumes (2) montierbar ist.

2. Vorrichtung nach Anspruch 1, **dadurch gekennzeichnet, daß** das Werkzeug (15) abgedichtet durch ein Gehäuse der Absaughülse (11) durchgeführt ist.

3. Vorrichtung nach Anspruch 1 oder 2, **dadurch gekennzeichnet, daß** an der Absaughülse (11) eine radial hervorstehende rohrförmige Durchführung (20) angeordnet ist, durch die ein Schaft des Werkzeuges (15) abgedichtet durchgeführt ist.

4. Vorrichtung nach einem der vorhergehenden Ansprüche 1 bis 3, **dadurch gekennzeichnet, daß** innerhalb der Absaughülse (11) zwei voneinander beabstandete ringförmige Dichtelemente (12, 13) vorgesehen sind, zwischen denen das Werkzeug (15) zu dem Steigleitungsrohr (1) durchführbar ist.

5. Vorrichtung nach einem der Ansprüche 1 bis 4, **dadurch gekennzeichnet, daß** das Werkzeug (15) ein radial von dem Gehäuse hervorstehenden Griffabschnitt (22), einen stabförmigen Schaft (23) und einen Werkzeugkopf (16) aufweist.

6. Vorrichtung nach einem der vorhergehenden Ansprüche 1 bis 5, **dadurch gekennzeichnet, daß** das Werkzeug (15) als Schraubendreher ausgebildet ist und eine Abdichtschraube (10) mit Innensechskant in eine Gewindebohrung des Steigleitungsrohres (1) eindrehbar ist.

7. Vorrichtung nach einem der vorhergehenden Ansprüche 1 bis 6, **dadurch gekennzeichnet, daß** an der Absaughülse (11) mindestens ein Sichtfenster (17) zur visuellen Erfassung des Abdichtelementes (8) angeordnet ist.

8. Vorrichtung nach einem der vorhergehenden Ansprüche 1 bis 7, **dadurch gekennzeichnet, daß** an der Absaughülse (11) einen mit dem Steigleitungsrohr (1) zusammenwirkenden Anschlag (31) zur Positionierung der Werkzeuges (15) benachbart zu dem Dichtungselement (8) aufweist.

9. Vorrichtung nach einem der vorhergehenden Ansprüche 1 bis 8, **dadurch gekennzeichnet, daß** an der Absaughülse (11) an gegenüberliegenden Seiten eine Mutter (30, 34) vorgesehen ist, mittels der je ein Dichtring (12, 13) komprimierbar ist.
